# EUROPEAN PATENT APPLICATION

(11) **EP 2 083 552 A1**
(43) Date of publication of application: **29.07.2009**
(21) Application number: 08300055.4
(22) Date of filing: 28.01.2008
(51) Int. Cl.: H04L 29/08

(54) **A method for enhanced data transfer, corresponding device and program module therefor**

(71) Applicant: Alcatel Lucent, 75008 Paris (FR)
(72) Inventor: Wallois, Marc, F-78360 Montesson (FR)
(74) Representative: Brose, Gerhard

(57) **Abstract**

The invention concerns a method for transferring data from a local device to a remote device, whereby the method comprises the steps of writing to a first holding register of the remote device to indicate commencing of a transfer, repeatedly writing data blocks to contiguous holding registers of the remote device, and writing to a second holding register of the remote device to indicate completion of the transfer. The invention further concerns a device and program module therefore.

## Description

The invention relates to a method for transferring data between devices in accordance with a communication protocol according to the preamble of claim 1, a device according to the preamble of claim 9, and a program module according to the preamble of claim 10.

The Open Systems Interconnection Basic Reference Model (OSI Reference Model) is a layered, abstract description for communications and computer network protocol design, developed as part of the Open Systems Interconnection (OSI) initiative. It is also called the OSI seven layer model. The layers are, from top to bottom, Application, Presentation, Session, Transport, Network, Data Link, and Physical. A layer is a collection of related functions that provides services to the layer above it and receives service from the layer below it. For example, a layer that provides error-free communications across a network provides the path needed by applications above it, while it calls the next lower layer to send and receive packets that make up the contents of the path. For details, refer to "OSI Reference Model - The ISO Model of Architecture for Open Systems Interconnection", Hubert Zimmermann, IEEE Transactions on Communications, vol. 28, no. 4, April 1980, pp. 425 - 432.

MODBUS is an application layer messaging protocol, positioned at level 7 of the OSI Reference Model, that provides client-server communication between devices connected on different types of buses or networks. MODBUS is a request-reply protocol and offers services specified by function codes. MODBUS function codes are elements of MODBUS request-reply protocol data units (PDUs). MODBUS is currently implemented using TCP/IP over Ethernet, asynchronous serial transmission over a variety of media (wire: EIA/TIA-232-E, EIA-422, EIA/TIA-485-A; fiber, radio, etc.), and MODBUS PLUS, a high speed token passing network. The full MODBUS application protocol specification is available from Modbus Organization, Inc.

A common network application scenario is the transfer of files or other large binary objects between two or more devices connected via MODBUS or other essentially serial transmission protocols. A routine solution to this requirement is the use of the MODBUS function "Write File Record" (function code 0x15). The Internet discussion article "Transferring Chunk Data with MODBUS protocol" at http://www.control.com/thread/1026228832 gives an example of applying this function to the transfer of data. The downside of this conventional approach is the increased network traffic imposed by the target device's response, which according to the MODBUS specification is an echo of the request. As a consequence, using the "Write File Record" function, each byte of data is effectively transferred twice between the local and remote device: once upon writing and once upon responding to the write operation.

The object of the invention is thus to propose an improved approach to transferring data via MODBUS and other serial transmission protocols while restricting network traffic to a minimum.

This object is achieved by a method according to the teaching of claim 1, a device according to the teaching of claim 9, and a program module according to the teaching of claim 10.

The main idea of the invention is to transmit data to the remote device by repetitively writing blocks of those data to contiguous holding registers of the remote device instead of writing the data as a file record. Thus the communication overhead implied by an echo of the complete data can be avoided. By an echo is meant the sending back of the request data without modification by the remote device, as opposed to a simple acknowledgment without duplication of the request data.

The invention can also be applied to other communication protocols than MODBUS, provided that the respective protocol supports the basic operations of writing both single and contiguous holding registers of a remote device.

Further developments of the invention can be gathered from the dependent claims and the following description.

In the following the invention will be explained further making reference to the attached drawing.

A bus or network in which the invention can be implemented connects at least two devices, hereinafter referred to as the local and remote device. A device may be, for example, a programmable logic controller (PLC), human machine interface (HMI), control panel, driver, motion control, input or output (I/O) device. The local and remote device may be interconnected by means of a variety of network technologies, such as TCP/IP over Ethernet, asynchronous serial transmission, or a highspeed token passing network like MODBUS PLUS. In any case, the local and remote device should be suitable for supporting a given communication protocol, such as MODBUS or one of its variants, that allows the local device to initiate a remote operation on the remote device. In case this protocol is a client-server protocol, as is the case with MODBUS, the local device would take the role of the server and the remote device would take the role of the client. In a bus or network where one device has unidirectional control over one or more other devices, the local device is typically labeled the "master" device, whereas the remote device is typically labeled the "slave" device. Such a relationship is commonly called a master-slave model.

To transfer data from the local device to the remote device according to an embodiment of the invention, the local device initiates the transfer process by writing a predefined value to a first holding register of the remote device. Subsequently, the local device repetitively writes as many data blocks to the remote device's holding registers as are required to transmit the complete data. Each data block is accompanied by a corresponding sequence number to aid the remote device in synchronizing its read operations and detecting disruptions of the incoming data stream. Finally, the local device terminates the transfer process by writing a predefined value to the same or a second holding register of the remote device, typically causing the latter to finalize the received data.

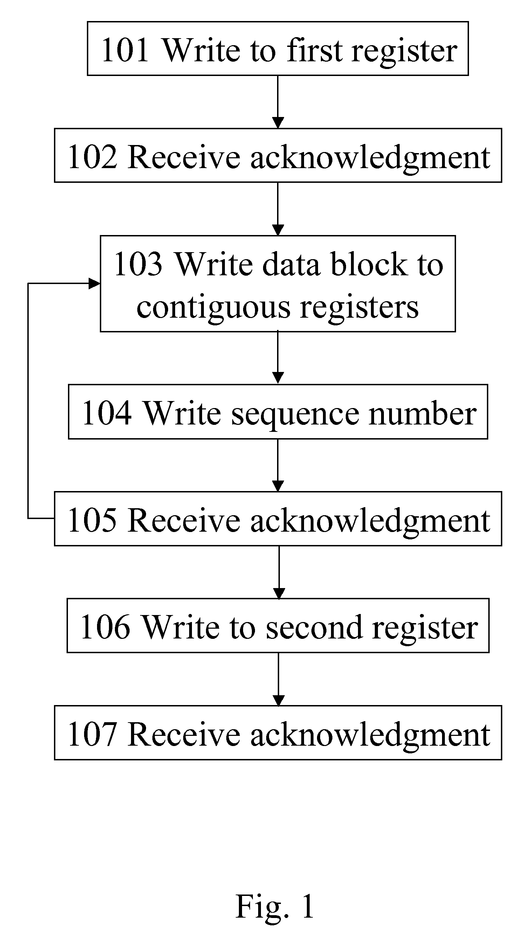

In the following, the method according to the invention is elucidated by way of example, referencing Fig. 1.

Fig. 1 schematically shows a method according to one embodiment of the invention for transferring data from the local device to the remote device.

In a first step 101, the local device initiates the transfer process by writing a predefined value to a first holding register of the remote device. This value would typically cause the remote device to initiate appropriate measures for receiving and storing the incoming data. Using the MODBUS protocol, the local device could request this operation by means of the function "Write Single Register" (function code 0x06). In this case, the request PDU would specify the address of the register to be written. Registers are typically addressed starting at zero; for instance, the first register would be addressed as register 0.

In an optional step 102, the local device receives an acknowledgment from the remote device, indicating that the value of step 101 has been successfully written to the holding register of the remote device. Using the MODBUS protocol, this response would comprise an echo of the request, returned after the register contents have been written.

In step 103, the local device writes a data block to contiguous holding registers of the remote device. In this context, a set of registers is considered contiguous if they appear to be or are adjacent, or connected to, one another. Typically, the data block comprises a contiguous byte range of the data to be transferred. In their entirety, these data may constitute a computer file, or other binary object, for use by the remote device. An example of a file or set of files is an updated driver to be installed on the remote device. Using the MODBUS protocol, function "Write Multiple Registers" (function code 0x10) may be used to perform this operation. In a preferred embodiment, the maximum possible number of registers (123 in MODBUS) is written at once to allow for a maximum quantity of data to be transmitted in a single function call.

In a further optional step 104, the local device writes a sequence number associated with the data block of step 103 to a further holding register of the remote device. This number denotes the portion of the data transferred in step 103 and may be used by the remote device to assemble these data in their entirety from a plurality of such portions. In a preferred embodiment, the sequential nature of the number also allows for an effective detection of transmission errors by the remote device since non-consecutiveness of multiple numbers may indicate a disruption in network traffic. Using the MODBUS protocol, as in step 101, the function "Write Single Register" (function code 0x06) may be used for the write operation.

In yet another optional step 105, the local device receives an acknowledgment from the remote device, indicating that the data block and/or sequence number has been successfully written to the holding register(s) of the remote device. Using the MODBUS protocol, this response would comprise the function code, starting address, and quantity of registers written.

Step 103 and, optionally, steps 104 and/or 105 are typically repeated for consecutive data blocks until the data transfer is complete. In the special case that the acknowledgment of step 105 is negative, that is, indicative of a failure in writing the contiguous registers, the local device may rewrite the respective data block to those registers. An embodiment of the invention may also choose to rewrite the data block if the acknowledgment of step 105 is expected, but not received within a predetermined time interval. In this case, a possible duplication of the respective data block in the remote device may be avoided by means of the sequence number of step 104, which would allow the remote device to uniquely identify each data block.

In step 106, the local device terminates the transfer process by writing a predefined value to a second holding register of the remote device. Typically, encountering this value in the respective register causes the remote device to finalize the received data and proceed with normal operation. The first holding register of step 101 and the second holding register of step 106 may be the same register, in which case the predefined values used in steps 101 and 106 must be distinct to allow the remote device to detect a modification of that register. Using the MODBUS protocol, as in steps 101 and 104, the function "Write Single Register" (function code 0x06) may be used for the write operation.

Finally, in an optional step 107, the local device receives an acknowledgment from the remote device, indicating that the value of step 106 has been successfully written to the second holding register of the remote device. Using the MODBUS protocol, this response would comprise an echo of the request of step 106, returned after the register contents have been written.

## Claims

1. A method for transferring data from a local device to a remote device, **characterized in that** the method comprises the steps of
writing to a first holding register of the remote device to indicate commencing of a transfer,
repeatedly writing data blocks to contiguous holding registers of the remote device, and
writing to a second holding register of the remote device to indicate completion of the transfer.

2. A method according to claim 1, **characterized in that** the method further comprises, for each data block of the data blocks, writing a sequence number associated with the data block to a further holding register of the remote device.

3. A method according to claim 1 or 2, **characterized in that** the method further comprises receiving from the remote device an acknowledgment of writing to the first, second, and contiguous holding registers.

4. A method according to claim 3, **characterized in that** the acknowledgment of writing to the contiguous holding registers comprises a starting address of the contiguous holding registers and a quantity of the contiguous holding registers.

5. A method according to claims 3 or 4, **characterized in that** the method comprises, in response to a negative acknowledgment of writing to the contiguous holding registers, rewriting a data block to the contiguous holding registers.

6. A method according to any of the preceding claims, **characterized in that** the first and second holding registers are the same holding register.

7. A method according to any of the preceding claims, **characterized in that** communication between the local device and the remote device is established by means of the MODBUS application protocol and the local and remote devices are mutually connected by either of the following:
TCP/IP over Ethernet,
asynchronous serial transmission, and
a token passing network.

8. A method according to any of the preceding claims, **characterized in that** the data constitute a computer file.

9. A device for transferring data to a remote device,
**characterized in that** the device comprises
means for writing to a first holding register of the remote device to indicate commencing of a transfer,
means for writing data blocks to contiguous holding registers of the remote device, and
means for writing to a second holding register of the remote device to indicate completion of the transfer.

10. A program module to be executed in a local device for transferring data to a remote device,
**characterized in that,** upon activation of the program module,
a first holding register of the remote device is written to indicate commencing of a transfer,
data blocks are repeatedly written to contiguous holding registers of the remote device, and
a second holding register of the remote device is written to indicate completion of the transfer.
